# EUROPÄISCHE PATENTSCHRIFT

(11) **EP 0 839 865 B1**
(45) Veröffentlichungstag und Bekanntmachung des Hinweises auf die Patenterteilung: **29.01.2003**
(21) Anmeldenummer: 97810780.3
(22) Anmeldetag: 21.10.1997
(51) Int. Cl.: C08L 63/00

(54) **Härtbare Epoxidharzzusammensetzungen**
Curable epoxy resin compositions
Compositions de résines epoxy durcissables

(30) Priorität: 30.10.1996 CH 267996
(43) Veröffentlichungstag der Anmeldung: 06.05.1998
(73) Patentinhaber: Vantico AG, 4057 Basel (CH)
(72) Erfinder: Weidmann, Ulrich, 4055 Basel (CH)
(74) Vertreter: Dannappel, Hans-Jochen, Dr.

(56) Entgegenhaltungen:
- EP-A- 0 497 987
- EP-A- 0 517 129
- EP-A- 0 738 759
- US-A- 4 042 550
- PATENT ABSTRACTS OF JAPAN vol. 007, no. 273 (C-198), 6.Dezember 1983 & JP 58 152047 A (TOSHIBA CHEMICAL KK), 9.September 1983,

## Beschreibung

Die vorliegende Erfindung betrifft die Verwendung von härtbaren Epoxidharzzusammensetzungen enthaltend ein Wachs mit einem Tropfpunkt von 80-95°C, als Giessharze, insbesondere für die Herstellung von Formteilen nach dem Druckgelierverfahren.

Zur Entformung von Formteilen aus gehärteten Giessharzsystemen auf der Basis von Epoxidharzen und Polycarbonsäureanhydriden als Härtungsmittel aus den formgebenden Werkzeugen werden in der Regel externe Formtrennmittel, beipielsweise das von der Ciba-Geigy im Handel unter der Bezeichnung "Trennmittel QZ 13" auf der Basis von Silikonen, auf die Werkzeugoberfläche aufgetragen. Zu hohe Konzentrationen von Formtrennmitteln auf diesen Oberflächen hinterlassen in der Regel Markierungen auf den gehärteten Formteilen.

Formteile auf der Basis von Epoxidharzen können auch nach dem sogenannten automatischen Druckgelierverfahren (Automatic Pressure Gelation Process = APG-Verfahren) hergestellt werden, wobei spezifische Epoxidharzgemische eingesetzt werden. Bei dem APG-Verfahren, das beispielsweise im GB-Patent 1 323 343 oder im EP-Patent 0 333 456 beschrieben wird, werden flüssige, etwa auf 40 bis 60°C vorgewärmte härtbare Epoxidharzgemische unter leichtem Druck in auf Härtungstemperaturen erhitzte Formen eingeführt. Durch anschliessende weitere Zugabe von härtbarem Epoxidharzgemisch unter Druck wird der Schwund der gelierten Masse in der Werkzeugform ausgeglichen. Bei den bisher eingesetzten Epoxidharzgemischen ist es aber erforderlich, die Werkzeugformen öfters zu reinigen.

Es wurde nun gefunden, dass sich härtbare, ein spezifisches Wachs als internes Trennmittel enthaltende Epoxidharzzusammensetzungen vorteilhaft zu Formteilen verarbeiten lassen, ohne dass man die Oberflächen der benutzten Werzeugformen öfters reinigen muss und ohne dass sich die mechanischen Eigenschaften der hergestellten Formteile verschlechtern.

Gegenstand vorliegender Erfindung ist daher die Verwendung einer Epoxidharzzusammensetzung, enthaltend
(a) ein unterhalb von 160°C flüssiges Epoxidharz mit durchschnittlich mehr als einer Epoxidgruppe im Molekül,
(b) eine Polycarbonsäure oder deren Anhydrid,
(c) 0,1-15 Gew.-%, bezogen auf die Menge der Komponenten (a) und (b), eines Wachses mit einem Tropfpunkt von 80 bis 95°C, und
(d) übliche Füllstoffe oder Zusatzmittel für Epoxidgiessharze,
als Giessharz im APG-Prozess.

Für die Herstellung der härtbaren Epoxidharzzusammensetzungen eignen sich als Epoxidharze (a) die in der Epoxidharztechnik üblichen unterhalb von 160°C flüssigen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen. Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, lsophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan. Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Bevorzugt verwendet man zur Herstellung der Epoxidharzzusammensetzungen einen flüssigen Polyglycidylether oder -ester, insbesondere einen flüssigen Bisphenoldiglycidylether oder einen flüssigen Diglycidylester einer cycloaliphatischen oder aromatischen Dicarbonsäure. Es können auch Gemische von Epoxidharzen verwendet werden.

Als Komponente (b) können die Epoxidharzzusammensetzungen beispielsweise aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren enthalten. Die genannten Polycarbonsäuren stellen bekannte Verbindungen dar.

Vorzugsweise enthalten die Epoxidharzzusammensetzungen als Komponente (b) ein cycloaliphatisches Dicarbonsäureanhydrid.

Im allgemeinen verwendet man die Komponente (b) in solchen Mengen, dass in den Epoxidharzzusammensetzungen pro 1 Äquivalent Epoxidgruppe 0,4 bis 1,1 Äquivalente Carboxylgruppe bzw. Anhydridgruppe vorhanden sind.

Die als Komponente (c) in den Epoxidharzzusammensetzungen verwendeten Wachse stellen ebenfalls bekannte Verbindungen dar, die im Handel erhältlich sind, beispielsweise als Hoechst-Wachse. Die zu verwendenden Wachse weisen einen Tropfpunkt gemäss DIN 51801 von 80 - 95°C, vorzugsweise von 80 - 90°C, eine Säurezahl gemäss DIN 53402 von 25 - 40, vorzugsweise von 25 - 35, und eine Verseifungszahl gemäss DIN 53401 von 120 140, vorzugsweise 125 - 135, auf.

Vorzugsweise verwendet man in den Epoxidharzzusammensetzungen als Wachs ein Esterwachs auf Basis von Montanwachs.

Die härtbaren Epoxidharzzusammensetzungen können auch die in der Epoxidharztechnik üblichen Füllstoffe und Zusatzmittel enthalten. Als Füllstoffe kommen beispielsweise die folgenden in Betracht Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit. Als Zusatzmittel kommen Pigmente, Farbstoffe Flammschutzmittel, Thixotropiemittel, Verlaufmittel (flow control agents), Antioxidantien oder Lichtschutzmittel in Betracht Der Anteil an Füllstoffen und Zusatzmitteln in den Epoxidharzgiessmassen beträgt zusammen höchstens 85 Gew.-%, bezogen auf die Komponenten (a), (b) und (c).

Die härtbaren Epoxidharzzusammensetzungen werden nach an sich bekannten Methoden, wie mit Hilfe bekannter Mischaggregate, beispielsweise Rührer, hergestellt.

Die Härtung der härtbaren Gemische zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville beschrieben wird.

Wie eingangs erwähnt, eignen sich die Epoxidharzzusammensetzungen vorzugsweise als Giessharzmassen.

Die Epoxidgiessharzmassen werden bevorzugt hergestellt, indem man das Wachs oberhalb von 100°C unter Rühren aufschmilzt und dann das gegebenenfalls gefüllte Epoxidharz und die Polycarbonsäure oder deren Anhydrid unter Rühren oberhalb 100°C zugibt und weiter bei dieser Temperatur durch Rühren innig vermischt, so dass das Wachs in der Epoxidgiessharzmassen dispergiert vorliegt.

Als Füllstoffe enthalten die Epoxidgiessharzmassen vorzugsweise pulverförmige Füllstoffe, und auch die Zusatzmittel werden den Epoxidgiessharzmassen in pulverförmiger oder flüssiger Form zugesetzt.

Die härtbaren Epoxidgiessharzmassen werden als Giessharze vorzugsweise und in vorteilhafter Weise nach dem APG-Verfahren verarbeitet, so dass die Herstellung von Formstoffen aus den Epoxidgiessharzen nach dem APG-Verfahren eine bevorzugten Anwendungsform darstellt.

Gegenstand vorliegender Erfindung ist somit die Verwendung der Epoxidgiessharze zur Herstellung von Formstoffen nach dem Druckgelierverfahren, insbesondere zur Herstellung von grossflächigen Formteilen nach dem APG-Verfahren.

Bei der Verwendung der härtbaren Epoxidgiessharzmassen im APG-Verfahren werden die Epoxidgiessharzmassen vorzugsweise auf über 100°C erwärmt und in eine auf über 100°C erwärmte Werkzeugform unter leichtem Giessdruck, vorzugsweise zwischen 0,1 •10 ⁻⁵ Pa - 5,0 •10⁻⁵ Pa eingefüllt

### Beispiel 1

Den Rührtopf eines Planetenmischers beschickt man mit 10,02 g eines Esterwachses auf Basis von Montanwachs mit einem Tropfpunkt von 83°C, erhältlich im Handel unter der Bezeichnung "Hoechst Wachs KSL" der Firma Hoechst AG, und lässt dieses unter Rühren bei 140°C aufschmelzen. Nach dem vollständigen Aufschmelzen des Wachses setzt man 808,15 g eines gefüllten Epoxidharzes, bestehend aus 24 - 28 Gew.-% eines Bisphenol A-diglycidylethers mit einem Epoxidgehalt von 1,0 - 5,3 Äquivalenten/kg, 0,03 Gew.-% des Fliessmittels BYK®W 935 der Firma BYK-Malinckrodt, 2,0 Gew.-% eines Gemisches aus Titandioxid RHD 6 der Firma Tioxide, England, und Eisenoxidgelb der Firma Harcros Pigmente, England, im Verhältnis von 9:1, 59,91 Gew.-% Quarz Z 300 der Firma Hoben Davis, England, und 9,99 Gew.-% Quarz 3M 500 der Firma Sihelco, Schweiz, und 181,80 g Hexahydropthalsäureanhydrid nacheinander hinzu. Die resultierende leicht rührbare Flüssigkeit rührt man weitere 20 Minuten bei 140°C. Anschliessend entgast man diese Mischung bei 140°C und etwa 3•10⁻² Pa während etwa 15 Minuten. Die Mischung wird in Aluminium- oder Stahlformen vergossen und während 10 Minuten bei 160°C und 2 Stunden bei 135°C ausgehärtet. Der ausgehärtete Formkörper lässt sich problemlos von den Aluminium- oder Stahloberflächen entformen und weist folgende Eigenschaften auf:

| | |
|---|---|
| Zugfestigkeit gemäss ISO R 527 | 84 MPa |
| Biegefestigkeit gemäss ISO 178 | 136 MPa |
| E-Modul aus Biegefestigkeit | 9071 MPa |
| Schlagfestigkeit gemäss Charpy | 9,69 kJ/m² |
| Glasumwandlungstemperatur^{*)} | 125°C |

| | |
|---|---|
| ^{*)} gemessen nach der Torsional Analysis-Methode | |

### Beispiel 2

Der Rührtopf eines Planetenmischers wird mit 225 g eines Esterwachses auf Basis von Montanwachs mit einem Tropfpunkt von 83°C, erhältlich im Handel unter der Bezeichnung "Hoechst Wachs KSL" der Firma Hoechst AG, beschickt, und man lässt das Wachs unter Rühren bei 140°C aufschmelzen. Nach dem vollständigen Aufschmelzem des Wachses setzt man 18,14 kg eines gefüllten Epoxidharzes, bestehend aus 24 - 28 Gew.-% eines Bisphenol A-diglycidylethers mit einem Epoxidgehalt von 1,0 - 5,3 Äquivalenten/kg, 0,03 Gew.-% des Fliessmittels BYK®W 935 , 2,0 Gew.-% eines Gemisches aus Titandioxid RHD 6 und Eisenoxidgelb im Verhältnis von 9:1, 59,91 Gew.-% Quarz Z 300 und 9,99 Gew.-% Quarz M 500 hinzu und rührt die Mischung bei 100°C für weitere 30 Minuten. Anschliessend gibt man 4,08 kg Hexahydrophthalsäureanhydrid hinzu und rührt weitere 30 Minuten bei einer Temperatur von 85°C. Die resultierende leicht rührbare Flüssigkeit rührt man dann weitere 20 Minuten bei 140°C. Anschliessend entgast man die Mischung bei 140°C und etwa 3•10⁻² Pa während 15 Minuten. Die Mischung wird in den Drucktopf einer automatischen Druckgelierpresse (APG-Presse) der Firma Leisure & Vogel eingefüllt und nach dem Druckgelierverfahren zu Küchenabwaschbecken verarbeitet.

| | |
|---|---|
| Drucktopftemperatur | 80°C |
| Werkzeugtemperatur | 160°C |
| Giessdruck | 0,5•10⁻⁵ Pa |
| Druckanpassung | 1,5•10⁻⁵ Pa nach 1 Minute, 45 Sekunden |
| Entformungszeit inklusiv Füllzeit | 10 Minuten. |

Man erhält ein selbständig entformbares beigefarbenes Küchenabwaschbecken, das keine sichtbaren Farbinhomogenitäten aufweist.

### Beispiel 3

2,8 kg Bisphenol A-diglycidylether mit einem Epoxidgehalt von 5,0-5,25 Äquivalenten/kg, 2,38 kg Methyltetrahydrophtalsäureanhydrid, 40 g Benzyldimethylamin, 9,75 kg Quarz W 12 der Firma Quarzwerke Frechen, Deutschland, und 30 g eines Esterwachses auf Basis von Montanwachs mit einem Tropfpunkt von 83°C, erhältlich im Handel unter der Bezeichnung "Hoechst Wachs KSL" der Firma Hoechst AG werden miteinander unter Rühren bei einer Temperatur von 140°C aufgeschmolzen. Die resultierende leicht rührbare Flüssigkeit rührt man dann weitere 20 Minuten bei 140°C. Anschliessend entgast man die Mischung bei 140°C und etwa 3 •10⁻² Pa während 15 Minuten. Die Mischung wird in den Drucktopf einer APG-Presse der Firma Leisure & Vogel eingefüllt und nach dem Druckgelierverfahren in eine auf 145-155°C vorgewärmte Giessform für Stützisolatoren gegossen und 16 Minuten bei 145-155°C ausgehärtet. Auf diese Weise werden selbständig entformbare Stützisolatoren erhalten, die gemäss Röntgenspektroskopie lunkerfrei sind. Selbst nach 26 Formbelegungen können die Stützisolatoren noch problemlos selbständig entfernt werden. An Stützisolatoren, die mit Metalleinlegeteilen gefertigt sind, wird eine Umbruchfestigkeit gemäss DIN 48136-68 von 5402 N erhalten.

## Patentansprüche

1. Verwendung einer Epoxidharzzusammensetzung, enthaltend
(a) ein unterhalb von 160°C flüssiges Epoxidharz mit durchschnittlich mehr als einer Epoxidgruppe im Molekül,
(b) eine Polycarbonsäure oder deren Anhydrid,
(c) 0,1-15 Gew.-%, bezogen auf die Menge der Komponenten (a) und (b), eines Wachses mit einem Tropfpunkt von 80 bis 95°C, und
(d) übliche Füllstoffe oder Zusatzmittel für Epoxidgiessharze,
als Giessharz im APG-Prozess.

2. Verwendung einer Epoxidharzzusammensetzung gemäss Anspruch 1, enthaltend als Komponente (a) einen flüssigen Polyglycidylether oder -ester.

3. Verwendung einer Epoxidharzzusammensetzung gemäss Anspruch 1, enthaltend als Komponente (a) einen flüssigen Bisphenoldiglycidylether oder einen flüssigen Diglycidylester einer cycloaliphatischen oder aromatischen Dicarbonsäure.

4. Verwendung einer Epoxidharzzusammensetzung gemäss einem der Ansprüche 1 bis 3, enthaltend als Komponente (b) ein cycloaliphatisches Dicarbonsäureanhydrid.

5. Verwendung einer Epoxidharzzusammensetzung gemäss einem der Ansprüche 1 bis 4, enthaltend als Komponente (c) ein Esterwachs auf Basis von Montanwachs.

## Claims

1. Use of an epoxy resin composition, comprising
(a) an epoxy resin which is liquid at below 160°C and which has an average of more than one epoxy group in the molecule,
(b) a di- or polycarboxylic acid or its anhydride,
(c) 0.1-15 % by weight, based on the amount of components (a) and (b), of a wax having a dropping point from 80 to 95°C and, optionally,
(d) customary fillers or modifiers for epoxy resins, as a casting resin in the APG-process.

2. Use of an epoxy resin composition according to claim 1, wherein component (a) is a liquid polyglycidyl ether or ester.

3. Use of an epoxy resin composition according to claim 1, wherein component (a) is a liquid bisphenol diglycidyl ether or a liquid diglycidyl ester of a cycloaliphatic or aromatic dicarboxylic acid.

4. Use of an epoxy resin composition according to any one of claims 1 to 3, wherein component (b) is a cycloaliphatic dicarboxylic acid anhydride.

5. Use of an epoxy resin composition according to any one of claims 1 to 4, wherein component (c) is an ester wax based on montan wax.

## Revendications

1. Utilisation d'une composition de résines époxyde, contenant
(a) une résine époxyde liquide au-dessous de 160°C avec en moyenne plus d'un groupe époxyde dans la molécule,
(b) un polyacide carboxylique ou son anhydride,
(c) 0,1 à 15 % en poids, par rapport à la quantité des composants (a) et (b), d'une cire avec un point de goutte de 80 à 95°C, et
(d) des additifs usuels ou des additifs pour des résines époxyde à mouler,
comme résine à mouler dans le procédé APG.

2. Utilisation d'une composition de résines époxyde selon la revendication 1, contenant comme composant (a) un polyéther ou -ester de glycidyle liquide.

3. Utilisation d'une composition de résine époxyde selon la revendication 1, contenant comme composant (a) un éther diglycidylique liquide de bisphénol ou un ester diglycidylique liquide d'un acide dicarboxylique cycloaliphatique ou aromatique.

4. Utilisation d'une composition de résines époxyde selon une des revendications 1 à 3, contenant comme composant (b) un anhydride d'acide dicarboxylique cycloaliphatique.

5. Utilisation d'une composition de résines époxyde selon une des revendications 1 à 4, contenant comme composant (c) une cire ester à base de cire de lignite.
